(19) Europäisches Patentamt
European Patent Office
Office européen des brevets

(11) **EP 4 303 751 A1**

(12) **EUROPEAN PATENT APPLICATION**

(43) Date of publication:
**10.01.2024 Bulletin 2024/02**

(21) Application number: **22207027.8**

(22) Date of filing: **11.11.2022**

(51) International Patent Classification (IPC):
***G06F 30/23*** (2020.01)          *G06F 113/08* (2020.01)
*G06F 119/08* (2020.01)

(52) Cooperative Patent Classification (CPC):
**G06F 30/23;** G06F 2113/08; G06F 2119/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.07.2022 CN 202210794728**

(71) Applicants:
• **China Three Gorges Co., Ltd.
Wuhan Hubei 430010 (CN)**
• **China Three Gorges University
Yichang City, Hubei 443002 (CN)**

(72) Inventors:
• **JIANG, Dingguo
WUHAN, 430010 (CN)**
• **LIU, Wei
WUHAN, 430010 (CN)**
• **DAI, Huichao
WUHAN, 430010 (CN)**
• **WANG, Hai
WUHAN, 430010 (CN)**
• **REN, Shi
WUHAN, 430010 (CN)**
• **ZOU, Peng
WUHAN, 430010 (CN)**
• **ZHANG, Li
WUHAN, 430010 (CN)**

(74) Representative: **Lavoix
Bayerstraße 83
80335 München (DE)**

(54) **METHOD AND APPARATUS FOR PARTITIONING RESERVOIR TEMPERATURE FIELD, COMPUTER DEVICE, AND MEDIUM**

(57)    The present disclosure provides a method and apparatus for partitioning a reservoir temperature field, a computer device, and a medium. The method for partitioning the reservoir temperature field includes: carrying out discretization on a spatial region of a reservoir to obtain a first number of reservoir region spatial discrete points; based on water temperature-hydrodynamic features of each reservoir region spatial discrete point at different moments and an actual spatial position of each reservoir region spatial discrete point, carrying out clustering processing on the first number of reservoir region spatial discrete points to obtain a second number of reservoir temperature field regions and a spatial distribution of each reservoir temperature field region; and according to a corresponding actual spatial position of each reservoir temperature field region, determining a region type corresponding to each reservoir temperature field region. According to the present disclosure, an obtained reservoir temperature field partitioning result does not need to be depended on experimental parameters, reservoir temperature field partitioning based on a specified time interval has higher objectivity and stability, and the powerful technical support can be provided for actual operation and scheduling of the reservoir.

Fig. 1

EP 4 303 751 A1

**Description**

**TECHNICAL FIELD**

The present disclosure relates to the technical field of hydraulic engineering, in particular to a method and apparatus for partitioning a reservoir temperature field, a computer device, and a medium.

**BACKGROUND**

An artificial reservoir formed by building a dam on a river channel can bring comprehensive benefits in many aspects to the human society. When the reservoir brings great benefits, some ecological problems are also generated and need to be solved, wherein the river ecological influence caused by the change of a reservoir temperature field is long in duration and wide in action range and belongs to the hot spot research field in the ecological problems of hydraulic engineering.

The research focus of the reservoir temperature field is a water temperature vertical stratification phenomenon, i.e., a typical vertical three-layer distribution structure including a temperature change layer, a thermocline layer, and a temperature hysteresis layer. There is also a region in transition from a natural river course to a reservoir region along a reservoir, and the region extends by a certain distance from the reservoir tail to the downstream of the reservoir region, is similar with the natural river course in property, and is relatively weak in the aspect of water temperature vertical stratification. Therefore, at the same moment, there is one or more of the following four regions in the reservoir region: a mixed region, a temperature change region, a thermocline region, and a temperature hysteresis region. For an existing method for partitioning a reservoir temperature field, discrimination is carried out according to a critical temperature gradient, and the common critical temperature gradient may be 0.200°C/m. However, the setting of the critical temperature gradient is largely affected by subjective experience, and there is a big difference between the critical temperature gradients of different reservoirs or at different times.

Therefore, researching an objective, accurate, and rapid method for partitioning the reservoir temperature field has the important significance for the reservoir water temperature structure research and influence factor analysis.

**SUMMARY**

The present disclosure is to solve the technical problem of overcoming the defect of strong subjective experience of reservoir temperature field partitioning in the prior art so as to provide a method and apparatus for partitioning a reservoir temperature field, a computer device, and a medium.

According to a first aspect, the present disclosure provides a method for partitioning a reservoir temperature field, including:

based on topographic data of a reservoir, determining a spatial region of the reservoir;

carrying out discretization on the spatial region to obtain a first number of reservoir region spatial discrete points and an actual spatial position of each reservoir region spatial discrete point;

within a specified time period, reading water temperature-hydrodynamic feature data obtained after the first number of reservoir region spatial discrete points are respectively subjected to numerical simulation at different moments;

based on an actual spatial position of each reservoir region spatial discrete point and the water temperature-hydrodynamic feature data of each reservoir region spatial discrete point at different moments, carrying out clustering processing on the first number of reservoir region spatial discrete points to obtain a second number of reservoir temperature field regions and a spatial distribution of each reservoir temperature field region, wherein the second number is smaller than the first number, and each reservoir temperature field region includes at least one reservoir region spatial discrete point; and

according to the spatial distribution of each reservoir temperature field region, respectively determining a region type corresponding to each reservoir temperature field region.

In this mode, based on the actual spatial position of each reservoir region discrete point in the spatial region of the reservoir and the water temperature-hydrodynamic feature data of each reservoir region discrete point at different moments, region partitioning is carried out on the reservoir to obtain the spatial distributions of the second number of reservoir temperature field regions in the reservoir, which is helpful for improving effectiveness and accuracy of partitioning the reservoir temperature field regions. In addition, in the region partitioning process, partitioning is carried out based on water temperature-hydrodynamic feature changes of the adjacent reservoir region discrete points without depending on experience parameters, so that an obtained partitioning result of the temperature field regions has higher objectivity.

In combination with the first aspect, in a first embodiment of the first aspect, the step of, based on the actual spatial position of each reservoir region spatial discrete point and the water temperature-hydrodynamic feature data of each reservoir region spatial discrete point at different moments, carrying out clustering processing on the first number of reservoir region spatial discrete points to obtain the second number of reservoir temperature field regions includes:

according to the actual spatial position of each reservoir region spatial discrete point and the water temperature-hydrodynamic feature data of each reservoir region spatial discrete point at different moments, obtaining high-dimensional data corresponding to each reservoir region spatial discrete point;

integrating the high-dimensional data of all the reservoir region spatial discrete points to obtain a high-dimensional data set corresponding to the first number of reservoir region spatial discrete points;

generating a high-dimensional data space corresponding to the high-dimensional data set;

randomly selecting a second number of reservoir region spatial discrete points from the first number of reservoir region spatial discrete points and determining a number of the rest of reservoir region spatial discrete points as a third number, wherein the second number is the number of reservoir temperature field regions to be partitioned, and the sum of the second number and the third number equals the first number;

in the high-dimensional data space, calculating a distance between each of the third number of reservoir region spatial discrete points and each of the second number of reservoir region spatial discrete points and determining the reservoir temperature field region corresponding to each reservoir region spatial discrete point; and

clustering each reservoir region spatial discrete point into the corresponding reservoir temperature field region to obtain the second number of reservoir temperature field regions,

wherein each reservoir temperature field region includes a plurality of reservoir region spatial discrete points.

In this mode, clustering processing is carried out based on water temperature-hydrodynamic features of each reservoir region spatial discrete point, which is helpful for avoiding subjective interference of artificial partitioning, so that the obtained partitioning result is more helpful for fitting with a real hydrodynamic feature distribution of the reservoir, thereby facilitating improving objectivity and stability of partitioning the reservoir temperature field region.

In combination with the first embodiment of the first aspect, in a second embodiment of the first aspect, the step of, in the high-dimensional data space, calculating the distance between each of the third number of reservoir region spatial discrete points and each of the second number of reservoir region spatial discrete points includes:

in the high-dimensional data space, calculating a distance between a current reservoir region spatial discrete point and each of the second number of reservoir region spatial discrete points in the high-dimensional data space to obtain a second number of distances, the current reservoir region spatial discrete point being one of the third number of reservoir region spatial discrete points;

determining the minimum distance among the second number of distances as a target distance and determining the reservoir region spatial discrete point corresponding to the target distance from the second number of reservoir region spatial discrete points as a target reservoir region spatial discrete point; and

according to an actual spatial position of the current reservoir region spatial discrete point and a target actual spatial position of the target reservoir region spatial discrete point, aggregating the current reservoir region spatial discrete point and the target reservoir region spatial discrete point to obtain a target reservoir temperature field region corresponding to the current reservoir region spatial discrete point.

In combination with the second embodiment of the first aspect, in a third embodiment of the first aspect, the step of clustering each reservoir region spatial discrete point into the corresponding reservoir temperature field region to obtain the second number of reservoir temperature field regions includes:

based on the actual spatial positions of all the reservoir region spatial discrete points in each reservoir temperature field region, respectively calculating a regional spatial position of each reservoir temperature field region, and determining a central position point of each regional spatial position; and

if all the central position points are the same as the corresponding target reservoir region spatial discrete points, determining that clustering processing is completed, and obtaining the second number of reservoir temperature field regions.

In combination with the third embodiment of the first aspect, in a fourth embodiment of the first aspect, the method further includes:

if at least one central position point is different from the corresponding target reservoir region spatial discrete point, determining that clustering processing is uncompleted;

respectively determining the central position point of each regional spatial position as a clustering central point for the corresponding reservoir temperature field region; and

based on the clustering central point for each reservoir temperature field region, carrying out clustering processing again on the first number of reservoir region spatial discrete points until all the central position points obtained again are the same as the corresponding clustering central points.

In combination with the third embodiment or the fourth embodiment of the first aspect, in a fifth embodiment of the first embodiment, the method further includes:

marking each of the first number of reservoir region spatial discrete points according to the corresponding reservoir temperature field region; and

according to actual spatial position information and a corresponding mark of each reservoir region spatial discrete point, merging all the actual spatial position information belonging to the same reservoir temperature field region to obtain a spatial distribution of each reservoir temperature field region.

In combination with the fifth embodiment of the first aspect, in a sixth embodiment of the first aspect, the method further includes:
according to the spatial distribution of each reservoir temperature field region, outputting a spatial distribution image of the second number of reservoir temperature field regions in the spatial region of the reservoir.

In combination with the first aspect, in a seventh embodiment of the first aspect, the step of carrying out discretization on the spatial region to obtain the first number of reservoir region spatial discrete points and the actual spatial position of each reservoir region spatial discrete point includes:

by means of a pre-constructed three-dimensional water temperature-hydrodynamic model, carrying out discretization on the spatial region of the reservoir to obtain a first number of mesh regions;

respectively determining a mesh central point of each mesh region and using the mesh central points as reservoir region spatial discrete points so as to obtain the first number of reservoir region spatial discrete points; and

according to a spatial coordinate position of each mesh central point in the spatial region, determining the actual spatial position of each reservoir region spatial discrete point.

According to a second aspect, the present disclosure further provides an apparatus for partitioning a reservoir temperature field, including:

a first determining unit, which is used for: based on topographic data of a reservoir, determining a spatial region of the reservoir;

a discretizing unit, which is used for: carrying out discretization on the spatial region to obtain a first number of reservoir region spatial discrete points and an actual spatial position of each reservoir region spatial discrete point;

a data reading unit, which is used for: within a specified time period, reading water temperature-hydrodynamic feature data obtained after the first number of reservoir region spatial discrete points are respectively subjected to numerical simulation at different moments;

a clustering unit, which is used for: based on an actual spatial position of each reservoir region spatial discrete point and the water temperature-hydrodynamic feature data of each reservoir region spatial discrete point at different moments, carrying out clustering processing on the first number of reservoir region spatial discrete points to obtain a second number of reservoir temperature field regions and a spatial distribution of each reservoir temperature field region, wherein the second number is smaller than the first number and each reservoir temperature field region includes at least one reservoir region spatial discrete point; and

a second determining unit, which is used for: according to the spatial distribution of each reservoir temperature field region, respectively determining a region type corresponding to each reservoir temperature field region.

In combination with the second aspect, in a first embodiment of the second aspect, the clustering unit includes:

a first merging unit, which is used for: according to an actual spatial position of each reservoir region spatial discrete point and the water temperature-hydrodynamic feature data of each reservoir region spatial discrete point at different moments, obtaining high-dimensional data corresponding to each reservoir region spatial discrete point;

an integrating unit, which is used for integrating the high-dimensional data of all the reservoir region spatial discrete points to obtain a high-dimensional data set corresponding to the first number of reservoir region spatial discrete points;

a data space generating unit, which is used for generating a high-dimensional data space corresponding to the high-dimensional data set;

a selecting unit, which is used for randomly selecting a second number of reservoir region spatial discrete points from the first number of reservoir region spatial discrete points and determining a number of the rest of reservoir region spatial discrete points as a third number, wherein the second number is the number of reservoir temperature field regions to be partitioned and the sum of the second number and the third number equals the first number;

a classifying unit, which is used for: in the high-dimensional data space, calculating a distance between each of the third number of reservoir region spatial discrete points and each of the second number of reservoir region spatial discrete points and determining the reservoir temperature field region corresponding to each reservoir region spatial discrete point; and

a clustering sub-unit, which is used for: clustering each reservoir region spatial discrete point into the corresponding reservoir temperature field region to obtain the second number of reservoir temperature field regions,

wherein each reservoir temperature field region includes a plurality of reservoir region spatial discrete points.

In combination with the first embodiment of the second aspect, in a second embodiment of the second aspect, the classifying unit includes:

a third determining unit, which is used for: in the high-dimensional data space, calculating a distance between a current reservoir region spatial discrete point and each of the second number of reservoir region spatial discrete points in the high-dimensional data space to obtain a second number of distances, the current reservoir region spatial discrete point being one of the third number of reservoir region spatial discrete points;

a fourth determining unit, which is used for: determining the minimum distance among the second number of distances as a target distance and determining the reservoir region spatial discrete point corresponding to the target distance from the second number of reservoir region spatial discrete points as a target reservoir region spatial discrete point; and

an aggregating unit, which is used for: according to an actual spatial position of the current reservoir region spatial discrete point and a target actual spatial position of the target reservoir region spatial discrete point, aggregating the current reservoir region spatial discrete point and the target reservoir region spatial discrete point to obtain a target reservoir temperature field region corresponding to the current reservoir region spatial discrete point.

In combination with the second embodiment of the second aspect, in a third embodiment of the second aspect, the clustering sub-unit includes:

a fifth determining unit, which is used for: based on the actual spatial positions of all the reservoir region spatial discrete points in each reservoir temperature field region, respectively calculating a regional spatial position of each reservoir temperature field region, and determining a central position point of each regional spatial position; and

a first executing unit, which is used for: if all the central position points are the same as the corresponding target reservoir region spatial discrete points, determining that clustering processing is completed, and obtaining the second number of reservoir temperature field regions.

In combination with the third embodiment of the second aspect, in a fourth embodiment of the second aspect, the apparatus further includes:

a sixth determining unit, which is used for: if at least one central position point is different from the corresponding target reservoir region spatial discrete point, determining that clustering processing is uncompleted;

a seventh determining unit, which is used for: respectively determining the central position point of each regional spatial position as a clustering central point for the corresponding reservoir temperature field region; and

a second executing unit, which is used for: based on the clustering central point for each reservoir temperature field region, carrying out clustering processing again on the first number of reservoir region spatial discrete points until all the central position points obtained again are the same as the corresponding clustering central points.

In combination with the third embodiment or the fourth embodiment of the second aspect, in a fifth embodiment of the second aspect, the apparatus further includes:

a marking unit, which is used for: marking each of the first number of reservoir region spatial discrete points according to the corresponding reservoir temperature field region; and

a second merging unit, which is used for: according to actual spatial position information and a corresponding mark of each reservoir region spatial discrete point, merging all the actual spatial position information belonging to the same reservoir temperature field region to obtain a spatial distribution of each reservoir temperature field region.

In combination with a fifth embodiment of the second aspect, in a sixth embodiment of the second aspect, the apparatus further includes:
an output unit, which is used for: according to the spatial distribution of each reservoir temperature field region, outputting a spatial distribution image of the second number of reservoir temperature field regions in the spatial region of the reservoir.
In combination with the second aspect, in a seventh embodiment of the second aspect, the discretizing unit includes:

a partitioning unit, which is used for: by means of a pre-constructed three-dimensional water temperature-hydrodynamic model, carrying out discretization on the spatial region of the reservoir to obtain a first number of mesh regions;

an eighth determining unit, which is used for: respectively determining a mesh central point of each mesh region and using the mesh central points as reservoir region spatial discrete points so as to obtain the first number of reservoir region spatial discrete points; and

a ninth determining unit, which is used for: according to a spatial coordinate position of each mesh central point in the spatial region, determining the actual spatial position of each reservoir region spatial discrete point.

According to a third aspect, an embodiment of the present disclosure further provides a computer device, including a memory and a processor. The memory and the processor are in mutual communicational connection, the memory has computer instructions stored therein, and the processor is configured to perform the method for partitioning the reservoir temperature field in any one of the first aspect and the optional embodiments thereof by executing the computer instructions.
According to a fourth aspect, an embodiment of the present disclosure further provides a computer readable storage medium. Computer instructions are stored in the computer readable storage medium. The computer instructions are used for enabling a computer to perform the method for partitioning the reservoir temperature field in any one of the first aspect and the optional embodiments thereof.

## BRIEF DESCRIPTION OF THE DRAWINGS

In order to more clearly illustrate the technical solution of the specific embodiments of the present disclosure or the prior art, the drawings that need to be used in the specific embodiments or description in the prior art will be briefly described in the following. It is obvious that the described drawings are only related to some embodiments of the present disclosure, and those ordinary skilled in the art also can obtain other drawings, without any inventive work, according to the drawings.

Fig. 1 is a flow chart of a method for partitioning a reservoir temperature field, as disclosed according to an exemplary embodiment.

Fig. 2 is a schematic diagram of a spatial distribution image, as disclosed according to an exemplary embodiment.

Fig. 3 is a flow chart of a method for partitioning a reservoir temperature field region, as disclosed according to an exemplary embodiment.

Fig. 4 is a schematic diagram of evaluation of a clustering result, as disclosed according to an exemplary embodiment.

Fig. 5 is a structural block diagram of an apparatus disclosed according to an exemplary embodiment.

Fig. 6 is a schematic diagram of a hardware structure of a computer device, as disclosed according to an exemplary embodiment.

## DETAILED DESCRIPTION

The technical solution of the present disclosure will be described in a clearly and fully understandable way in connection with the drawings. It is obvious that the described embodiments are just a part but not all of the embodiments of the present disclosure. Based on the embodiments of the present disclosure, those ordinary skilled in the art can obtain other embodiment(s), without any inventive work, which should be within the scope of protection of the present disclosure.

In the related art, when distribution situations of various temperature field types in a reservoir are predicted, a vertical water temperature distribution of the reservoir is obtained based on an in-situ monitoring or numerical simulation mode, and then vertical stratification partitioning is carried out by utilizing a critical temperature gradient so as to determine the distribution situation of each temperature field type in the reservoir.

Since the critical temperature gradient is determined based on the artificial experience, there is no definite specification for reference. In addition, topographic data among different reservoirs is also different, so if the same critical temperature gradient is adopted to predict the temperature field vertical stratification of different reservoirs, it is liable to cause relatively low accuracy of a partitioning result, resulting in that the effectiveness of data for subsequent research on the water temperature of the reservoir is affected.

In order to solve the problem above, an embodiment of the present disclosure provides a method for partitioning a reservoir temperature field, which is used in a computer device. It should be illustrated that a performing main body of the method may be an apparatus for partitioning a reservoir temperature field, and the apparatus may be implemented into a part or the whole of the computer device in a software, hardware, or software-hardware combined mode, wherein the computer device may be a terminal or a client or a server, the server may be one server, or may be a server cluster composed of a plurality of servers, and the terminal in the embodiments of the present application may be one of other intelligent hardware devices such as a smart phone, a personal computer, a tablet computer, a wearable device, an intelligent robot, etc. The following method embodiments are all illustrated by taking a case that the performing main body is the computer device as an example.

The computer device in this embodiment is applied to a usage scenario where a reservoir is partitioned according to the distribution situation of water temperature-hydrodynamic features in the reservoir so as to partition the distribution situations of various temperature field regions in the reservoir. By means of the method for partitioning the reservoir temperature field, as provided by the present disclosure, a spatial region of the reservoir can be determined based on topographic data of the reservoir so as to carry out discretization on the spatial region of the reservoir to obtain a first number of reservoir region spatial discrete points; and based on water temperature-hydrodynamic feature data of each reservoir region spatial discrete point at different moments, clustering processing is carried out on each reservoir region spatial discrete point to obtain a second number of reservoir temperature field regions, and then according to a spatial distribution of each reservoir temperature field region, a region type respectively corresponding to each reservoir temperature field region is determined, so that an obtained partitioning result has higher objectivity and reasonability and the powerful technical support can be provided for actual operation scheduling of the reservoir.

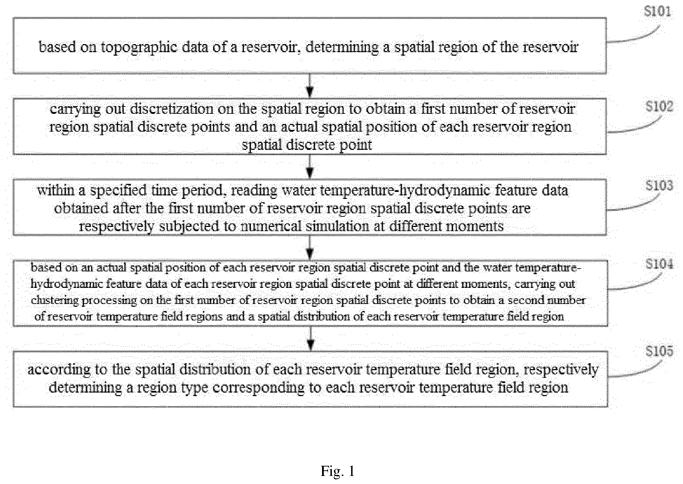

Fig. 1 is a flow chart of a method for partitioning a reservoir temperature field, as disclosed according to an exemplary embodiment. As shown in Fig. 1, the method for partitioning the reservoir temperature field includes the following steps S101 to S105.

In the step S101, based on topographic data of a reservoir, a spatial region of the reservoir is determined.

In an embodiment of the present disclosure, the topographic data is used for determining hydrological information, meteorological information, and related topographic information of a position where the reservoir is located. By the topographic data of the reservoir, a reservoir capacity and a water level height of the reservoir and related hydrological information such as a mean runoff rate of water that enters the reservoir and the like can be determined, wherein the water level height may at least include any one of the following water level height types (which are determined based on a Yellow Sea elevation coordinate system): a normal storage water level height and a dead water level height of the reservoir. The reservoir capacity may include at least one kind of the following information: total reservoir capacity information, regulation reservoir capacity information, reservoir capacity information corresponding to the normal storage water level height, or dead reservoir capacity information of the reservoir. For example, by taking a reservoir located in the subtropical monsoon climate zone in the Southwest of China as an example, through collecting topographic data of the reservoir, it can be determined that a mean annual runoff rate of the reservoir is 122.72 hundred million $m^3$; the normal storage water level of the reservoir is 490m, the dead water level is 483m (based on a Yellow Sea elevation coordinate system), the total reservoir capacity is 9.55 hundred million $m^3$, the regulation reservoir capacity is 1.438 hundred million $m^3$, the reservoir capacity corresponding to the normal storage water level is 8.82 hundred million $m^3$, and the dead reservoir capacity is 7.39 hundred million $m^3$.

Therefore, in order to improve accuracy of a partitioning result, the partitioning result of each reservoir temperature field region is enabled to further fit with an actual water temperature structure of the reservoir, so that based on the topographic data of the reservoir, the spatial region of the reservoir is determined.

In one embodiment, the water temperature structure of the reservoir may be simulated by means of a pre-constructed three-dimensional water temperature-hydrodynamic model according to hydrological information of the reservoir in historical time. In one example, the water temperature structure of a channel line section in the spatial region of the reservoir at a specified time point is simulated by the pre-constructed three-dimensional water temperature-hydrodynamic model to obtain a water temperature distribution diagram, wherein the water temperature distribution diagrams may be different at different time points. In the water temperature distribution diagram, different water temperatures may be partitioned with different colors.

In the step S102, discretization is carried out on the spatial region to obtain a first number of reservoir region spatial discrete points and an actual spatial position of each reservoir region spatial discrete point.

In an embodiment of the present disclosure, in order to facilitate implementing rapid partitioning and reduce the calculated amount, discretization is carried out on the spatial region to obtain the first number of reservoir region spatial discrete points, wherein the reservoir region spatial discrete point may be understood as a monitoring point for monitoring water temperature-hydrodynamic feature data. According to a spatial coordinate position of each reservoir region spatial discrete point in the spatial region, the actual spatial position of each reservoir region spatial discrete point is obtained, wherein the first number is the total number of the reservoir region spatial discrete points.

In one embodiment, it may be that: by means of the pre-constructed three-dimensional water temperature-hydrodynamic model, discretization is carried out on the spatial region of the reservoir to obtain a first number of mesh regions; according to a spatial distribution of each mesh region, a mesh central point of each mesh region is respectively determined and the mesh central points are used as reservoir region discrete points so as to obtain the first number of reservoir region spatial discrete points; and according to a spatial coordinate position of each mesh central point in the spatial region, the actual spatial position of each reservoir region spatial discrete point is determined.

In one implementation scenario, the first number of mesh regions may be determined in the following mode: by taking a case that a reservoir region range of the reservoir is 26km as an example, by means of a three-dimensional water temperature-hydrodynamic model, according to the water temperature structure of the reservoir, the spatial region of the reservoir within the range of 26km is partitioned in accordance with a specified mesh number (330 (longitudinal)* 15 (horizontal)* I 6(vertical)) to obtain mesh regions with a longitudinal mesh size of 14m to 84m, a horizontal mesh size of 58m to 80m, and a vertical mesh size of 0.8m to 28.0m. It is determined whether the mesh regions satisfy the orthogonality requirement mutually, and if yes, the specified mesh number is determined as the first number and the obtained mesh regions are determined as mesh regions to be used for obtaining the first number of reservoir region spatial discrete points.

In the step S103, within a specified time period, water temperature-hydrodynamic feature data obtained after the first number of reservoir region spatial discrete points are respectively subjected to numerical simulation at different moments is read.

In an embodiment of the present disclosure, each group of water temperature-hydrodynamic feature data includes water temperature-hydrodynamic feature data of the first number of reservoir region spatial discrete points at the same moment respectively. In order to improve clustering effectiveness, when each group of water temperature-hydrodynamic feature data is read, the water temperature-hydrodynamic feature data obtained after each reservoir region spatial discrete point is subjected to numerical simulation at the same moment is respectively read so as to determine temperature differences among different reservoir region spatial discrete points at the same moment, thereby avoiding influence on clustering effectiveness due to different acquisition times, wherein the water temperature-hydrodynamic feature data includes: water temperature data and hydrodynamic data. In one example, the lighting capacity of the sunlight for irradiating the water level is the highest at 12 o'clock at noon, so the distribution situation of the water temperature-hydrodynamic feature data is more obvious. Therefore, in order to improve accuracy of the partitioning result, the water temperature-hydrodynamic feature data after each reservoir region spatial discrete point is subjected to numerical simulation can be respectively read at 12 o'clock at noon.

In order to enable the obtained partitioning result of the reservoir temperature field regions to be more accurate and have higher research value, within the specified time period, according to a specified reading cycle, the water temperature-hydrodynamic feature data of each reservoir region spatial discrete point at different moments is respectively read so as to obtain multiple groups of water temperature-hydrodynamic feature data. For example, the specified time period may be a whole year (365 days), and the water temperature-hydrodynamic feature data of each reservoir region spatial discrete point is respectively read at 12 o'clock at noon every day. In one implementation scenario, the daily water temperature-hydrodynamic feature data of each reservoir region spatial discrete point may be subjected to statistics and arrangement through tables so as to obtain the to-be-clustered water temperature-hydrodynamic feature data.

In the step S104, based on an actual spatial position of each reservoir region spatial discrete point and the water temperature-hydrodynamic feature data of each reservoir region spatial discrete point at different moments, clustering processing is carried out on the first number of reservoir region spatial discrete points to obtain a second number of reservoir temperature field regions and a spatial distribution of each reservoir temperature field region.

In an embodiment of the present disclosure, based on hydrodynamic features of each reservoir region spatial discrete point at different moments, temperature changes of each reservoir region spatial discrete point at different moments can be determined, so that in combination with the actual spatial position of each reservoir region spatial discrete point, the first number of reservoir region spatial discrete points are clustered; and an association relationship among the water temperature-hydrodynamic feature data of all the reservoir region spatial discrete points can be determined so as to determine the distribution situation of the water temperature-hydrodynamic features of the reservoir and obtain the second number of reservoir temperature field regions and the spatial distribution of each reservoir temperature field region, wherein each reservoir temperature field region includes at least one reservoir region spatial discrete point, and the second number is smaller than the first number. In one example, the first number is the total number of the reservoir region discrete points obtained after the spatial region of the reservoir is discretized, and the second number is the total number of the reservoir temperature field regions, so the first number is much greater than the second number.

In the step S105, according to the spatial distribution of each reservoir temperature field region, a region type corresponding to each reservoir temperature field region is respectively determined.

In an embodiment of the present disclosure, according to the spatial distributions of the reservoir temperature field regions, the distribution situation of the water temperature-hydrodynamic features in a current reservoir temperature field region can be determined so as to determine the region type corresponding to the reservoir temperature field region, wherein the region type may include a mixed region, a temperature change region, a thermocline region, or a temperature hysteresis region.

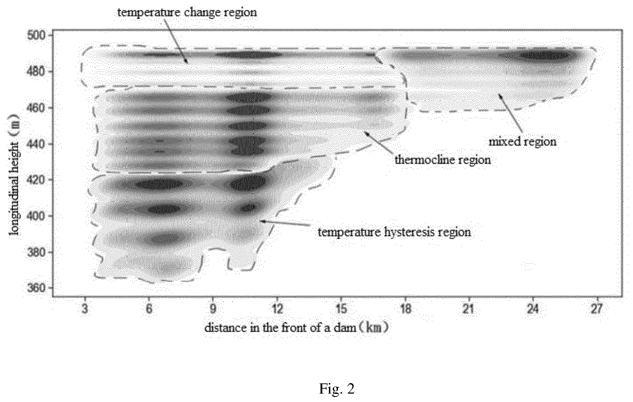

In one implementation scenario, in order to facilitate visually viewing the distribution situation of each region type by a user, a data visualization tool (e.g., the matplotlib tool library) can be utilized to show the distribution situations of the second number of reservoir temperature field regions in the reservoir in an image form. By taking a case of showing four region types of reservoir temperature field region distribution situations as an example, an obtained spatial distribution image of the reservoir temperature field regions in the reservoir can be as shown in Fig. 2. Fig. 2 is a schematic diagram of a spatial distribution image, as disclosed according to an exemplary embodiment. Four region types respectively are the temperature hysteresis region, the temperature change region, the thermocline region, and the mixed region, wherein an abscissa represents a distance in the front of a dam, and an ordinate represents a longitudinal depth of the reservoir.

Since the water temperature distribution diagram may be colored, the distribution situation of each reservoir temperature field region in the reservoir can be clarified through a color distribution change of each reservoir temperature field region, wherein different reservoir temperature field regions are partitioned with different colors. However, in the application document, in order to facilitate understanding and clarifying the color differences among all the reservoir temperature field regions and regional boundaries among all the reservoir temperature field regions by those skilled in the art, in Fig. 2, positions of different reservoir temperature field regions in the spatial distribution image are distinguished in a box selection marking mode so as to clarify the distribution situation of each reservoir temperature field region.

By the embodiment above, based on the actual spatial position of each reservoir region discrete point in the spatial region of the reservoir and the water temperature-hydrodynamic feature data of each reservoir region discrete point at different moments, region partitioning is carried out on the reservoir to obtain the spatial distributions of the second number of reservoir temperature field regions in the reservoir, which is helpful for improving effectiveness and accuracy of partitioning the reservoir temperature field regions. In addition, in the region partitioning process, partitioning is carried out based on the water temperature-hydrodynamic feature changes of the adjacent reservoir region discrete points without depending on experience parameters, so that the obtained partitioning result of the temperature field regions has higher objectivity.

In one implementation scenario, the water temperature-hydrodynamic feature data of each reservoir region spatial discrete point at a plurality of time points can be randomly selected to generate a corresponding reservoir region midstream-of-channel section water temperature distribution diagram so as to determine an evolvement mechanism of the water temperature structure of the reservoir.

The process of carrying out clustering processing on the first number of reservoir region spatial discrete points will be specifically illustrated by the following embodiments.

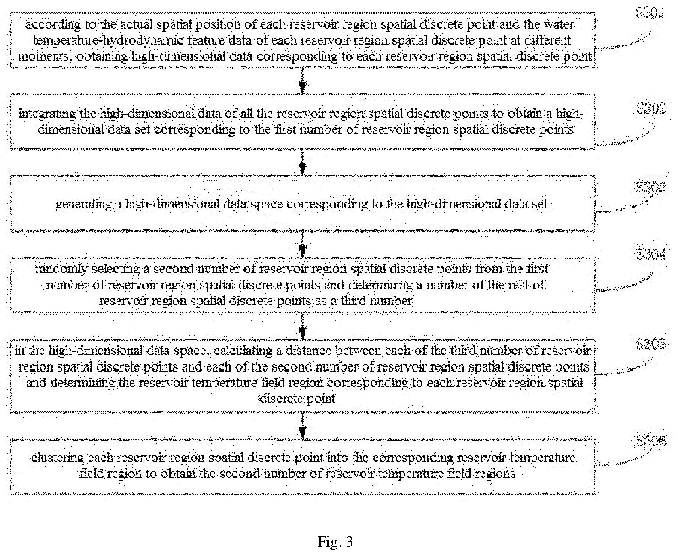

Fig. 3 is a flow chart of a method for partitioning a reservoir temperature field region, as disclosed according to an exemplary embodiment. As shown in Fig. 3, the method for partitioning the reservoir temperature field region includes the following steps.

In the step S301, according to the actual spatial position of each reservoir region spatial discrete point and the water temperature-hydrodynamic feature data of each reservoir region spatial discrete point at different moments, high-dimensional data corresponding to each reservoir region spatial discrete point is obtained.

In the step S302, the high-dimensional data of all the reservoir region spatial discrete points is integrated to obtain a high-dimensional data set corresponding to the first number of reservoir region spatial discrete points.

In an embodiment of the present disclosure, in order to facilitate clustering, the actual spatial position of each reservoir region spatial discrete point and the water temperature-hydrodynamic feature data of each reservoir region spatial discrete point at different moments are integrated to obtain the high-dimensional data set, so that when region partitioning is carried out subsequently, the similarity among the reservoir region spatial discrete points can be determined in combination with the water temperature-hydrodynamic feature changes of each reservoir region discrete point at different moments.

In one example, in order to avoid interference of invalid data, after the high-dimensional data set is obtained, each water temperature-hydrodynamic feature data in the high-dimensional data set is subjected to data cleaning processing to remove the invalid data so as to facilitate improving effectiveness of a clustering result. In order to improve the clustering efficiency, the residual data in the high-dimensional data set is normalized and standardized to carry out format unification on each data in the high-dimensional data set so as to promote clustering processing to be rapidly and orderly carried out.

In one implementation scenario, the high-dimensional data set may be integrated in a table mode. The integrated data can be as shown in Table 1 in the following. Table 1 is a high-dimensional data set integration table disclosed according to an exemplary embodiment, where X, Y, and Z respectively represent values corresponding to an abscissa, an ordinate, and a vertical coordinate of each reservoir region discrete point at the actual spatial position, T represents a water temperature, v represents flow rate data, and 1 to 365 are used for distinguishing different moments when the water temperatures or the flow rate data is acquired. The water temperatures and the flow rate data constitute the water temperature-hydrodynamic feature data of the reservoir region discrete points.

Table 1

| Data<br><br>Reservoir<br><br>Region Discrete Point | X<br><br>(m) | Y<br><br>(m) | Z<br><br>(m) | T1<br>(°C) | ... | T365<br>(°C) | v1<br>(m/s) | ... | v365<br>(m/s) |
|---|---|---|---|---|---|---|---|---|---|
| 1 | 18574746 | 2829032 | 383377 | 1499142 | ... | 16.28987694 | 0.003312584 | ... | 0.001531267 |
| 2 | 18574746 | 2829014 | 383377 | 1499142 | ... | 16.28987694 | 0.003302179 | ... | 0.001542458 |
| ... | ... | ... | ... | ... | ... | ... | ... | ... | ... |
| 36974 | 18576866 | 2823301 | 4898355 | 1497853 | ... | 16.39826 | 0.00037 | ... | 0.000246211 |
| 36975 | 18576796 | 2823277 | 4898355 | 1497793 | ... | 16.39827 | 0.000341 | ... | 0.000217017 |

In the step S303, a high-dimensional data space corresponding to the high-dimensional data set is generated.

In the step S304, a second number of reservoir region spatial discrete points are randomly selected from the first number of reservoir region spatial discrete points and a number of the rest of reservoir region spatial discrete points is determined as a third number.

In an embodiment of the present disclosure, the second number of reservoir region spatial discrete points are randomly selected from the first number of reservoir region spatial discrete points so as to use each of the second number of reservoir region spatial discrete points as an initial clustering central point of a to-be-clustered reservoir temperature field region. The second number is the number of reservoir temperature field regions to be partitioned. For example, if the second number is four, four reservoir region spatial discrete points are randomly selected from the first number of reservoir region spatial discrete points and are respectively used as the initial clustering central points of each reservoir temperature field region, so that when a third number of reservoir region spatial discrete points are clustered subsequently, clustering can be rapidly completed, wherein the sum of the second number and the third number equals the first number.

In the step S305, in the high-dimensional data space, a distance between each of the third number of reservoir region spatial discrete points and each of the second number of reservoir region spatial discrete points is calculated and the reservoir temperature field region corresponding to each reservoir region spatial discrete point is determined.

In an embodiment of the present disclosure, in the high-dimensional data space, the distance between each of the third number of reservoir region spatial discrete points and each of the second number of reservoir region spatial discrete points is respectively calculated so as to determine a to-be-clustered reservoir temperature field region corresponding to each of the third number of reservoir region spatial discrete points.

In one embodiment, the smaller the distance is, the more similar the water temperature-hydrodynamic features of the reservoir region spatial discrete points are, so that the possibility of belonging to the same reservoir temperature field region is higher. Therefore, in order to determine the reservoir temperature field region to which the current reservoir region spatial discrete point belongs, in the high-dimensional data space, the distance between the current reservoir region spatial discrete point and each of the second number of reservoir region spatial discrete points is calculated to obtain a second number of distances, wherein the current reservoir region spatial discrete point is one of the third number of reservoir region spatial discrete points. The minimum distance among the second number of distances is determined as a target distance and the reservoir region spatial discrete point corresponding to the target distance in the second number of reservoir region spatial discrete points is determined as a target reservoir region spatial discrete point. According to an actual spatial position of the current reservoir region spatial discrete point and a target actual spatial position of the target reservoir region spatial discrete point, the current reservoir region spatial discrete point and the target reservoir region spatial discrete point are aggregated to obtain a target reservoir temperature field region corresponding to the current reservoir region spatial discrete point.

For example, by taking a case that the second number is four as an example, each of the second number of reservoir region spatial discrete points is respectively replaced with a, b, c, and d. The current reservoir region spatial discrete point is represented by f. In order to determine the reservoir temperature field region to which f belongs, in the high-dimensional data space, distances between f and a, b, c, and d are respectively determined. If the value of the distance between f and a is the minimum, a is determined as the target reservoir region spatial discrete point, and

according to an actual spatial position of f and a target actual spatial position of a, f and a are aggregated to obtain a target reservoir temperature field region corresponding to f.

In the step S306, each reservoir region spatial discrete point is clustered into the corresponding reservoir temperature field region to obtain the second number of reservoir temperature field regions.

In an embodiment of the present disclosure, after the clustered reservoir temperature field region corresponding to each reservoir region spatial discrete point is determined, the reservoir region spatial discrete point is clustered into the corresponding reservoir temperature field region so as to obtain the second number of reservoir temperature field regions, wherein each reservoir temperature field region includes at least two reservoir region spatial discrete points.

By the embodiment above, based on the actual spatial position of each reservoir region spatial discrete point and the water temperature-hydrodynamic feature data of each reservoir region spatial discrete point at different moments, the first number of reservoir region spatial discrete points are clustered, which is helpful for carrying out partitioning in combination with the similarity among different reservoir region discrete points in the region partitioning process so as to facilitate avoiding subjective interference of artificial partitioning and make the obtained partitioning result more helpful for fitting with a real water temperature structure distribution of the reservoir, thereby enabling the obtained region partitioning result to have higher objectivity and reasonability.

In one embodiment, after clustering on all of the first number of reservoir region spatial discrete points is completed, in order to verify reasonability of the second number of reservoir temperature field regions obtained by clustering at present, based on the actual spatial positions of all the reservoir region spatial discrete points in each reservoir temperature field region, a regional spatial position of each reservoir temperature field region is respectively calculated and a central position point of each regional spatial position is determined so as to determine whether the central position point corresponding to each reservoir temperature field region obtained by clustering is the same as the corresponding target reservoir region spatial discrete point. If all the central position points are the same as the corresponding target reservoir region spatial discrete points, it represents that the target reservoir region spatial discrete point of each reservoir temperature field region is a valid clustering central point, so that it can be determined that clustering processing is completed, and the second number of reservoir temperature field regions are obtained.

In another embodiment, if at least one central position point is different from the corresponding target reservoir region spatial discrete point, it represents that the target reservoir region spatial discrete point of at least one reservoir temperature field region is an invalid clustering central point, and the second number of reservoir temperature field regions obtained by clustering at present are unreasonable. Therefore, it is determined that clustering processing is uncompleted, and clustering processing still needs to be performed. In order to obtain the reasonable second number of reservoir temperature field regions, the central position point of each regional spatial position is respectively determined as a clustering central point for the corresponding reservoir temperature field region, so that based on the clustering central point for each reservoir temperature field region, clustering processing is carried out again on the first number of reservoir region spatial discrete points until all the central position points obtained again are the same as the corresponding clustering central points. In one example, in order to avoid excessively long time for carrying out clustering processing and reduce the calculation cost, in the clustering process, the re-clustering number of times can be subjected to statistics. If the number of times obtained by accumulation reaches a predicted threshold of the number of times, the second number of reservoir temperature field regions obtained by the current clustering result of the number of times is used as the final second number of reservoir temperature field regions.

In one implementation scenario, a clustering mode which is pre-trained and does not need to carry out progress learning can be adopted to carry out clustering processing on the first number of reservoir region spatial discrete points. Preferably, the clustering model may be a K-Means model. The high-dimensional data set is input into the K-Means model, and according to a preset second number, clustering processing is automatically performed on the first number of reservoir region spatial discrete points in the high-dimensional data set so as to obtain the second number of reservoir temperature field regions.

In another implementation scenario, if the K-Means model is adopted to carry out clustering processing, the clustering result can be evaluated based on a Calinski-Harabasz(CH) index. The Calinski-Harabasz(CH) index is an evaluation criteria for determining an optimal clustering cluster number. A formula may be as follows:

$$CH(K) = \frac{trB(k)/(k-1)}{trW(k)/(n-k)},$$

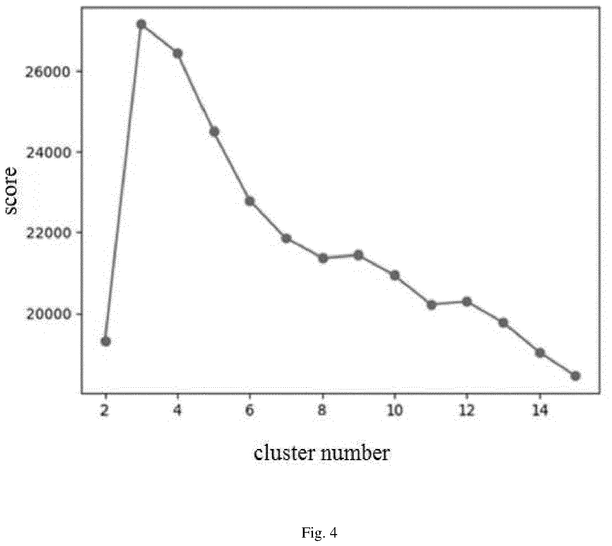

where n represents the second number, k represents a current class (one of the reservoir temperature field regions), trB(k) represents a trace of a between-class scatter matrix, trW(k) represents a trace of an intra-class scatter matrix, and CH(K) represents a clustering evaluation result of the current class. The higher the CH(K) value is, the better the clustering result of the current class is. The evaluation result is as shown in Fig. 4. Fig. 4 is a schematic diagram of evaluation of the clustering result, as disclosed according to an exemplary embodiment. In the schematic diagram of evaluation of the clustering result, an abscissa represents a cluster number for clustering, and an ordinate represents a corresponding score after evaluation.

In one embodiment, based on actual spatial position information of each reservoir region spatial discrete point, actual spatial position information of each reservoir temperature field region can be determined. The clustering result is post-processed by a data analysis tool (e.g., the pandas tool library), each of the first number of reservoir region spatial discrete points is marked according to the corresponding reservoir temperature field region to mark out the reservoir temperature field regions corresponding to the reservoir region spatial discrete points, so that according to the actual spatial position information and a corresponding mark of each reservoir region spatial discrete point, all the actual spatial position information belonging to the same reservoir temperature field region is merged to obtain a spatial distribution of each reservoir temperature field region.

In another embodiment, in order to facilitate visually observing the distribution situation of each reservoir temperature field region in the reservoir by the user, according to the spatial distribution of each reservoir temperature field region, a spatial distribution image of the second number of reservoir temperature field regions in the reservoir is output (the effect diagram can be as shown in Fig. 2).

In one implementation scenario, by the spatial distribution image of the second number of reservoir temperature field regions in the reservoir, the distribution situation of each reservoir temperature field region in the reservoir can be defined. For example, it is determined that the range of the mixed region of a certain reservoir is about 12km from an upstream boundary of a model along the river direction; a water body in the temperature change region is approximately located from an elevation of 470m to the free surface; the thermocline region is approximately located between elevations of 430m to 470m; and the temperature hysteresis region is located between the bottom of a reservoir region and the elevation of 430m.

In another implementation scenario, when the distribution situation of the reservoir temperature field is predicted, the following mode may be adopted to carry out prediction.

Firstly, according to the topographic data of the reservoir, the spatial region of the reservoir is determined.

Secondly, by means of the three-dimensional water temperature-hydrodynamic model, according to the water temperature structure of the reservoir, the reservoir capacity of the reservoir is discretized to obtain the first number of reservoir region spatial discrete points.

Then, by utilizing a pre-written script file for reading the water temperature-hydrodynamic feature data in batches, within the specified time period, the water temperature-hydrodynamic feature data obtained after the first number of reservoir region spatial discrete points are subjected to numerical simulation at different moments is read.

Then, according to the actual spatial position of each reservoir region spatial discrete point and the water temperature-hydrodynamic feature data of each reservoir region spatial discrete point at different moments, the high-dimensional data corresponding to each reservoir region spatial discrete point is obtained. The high-dimensional data of all the reservoir region spatial discrete points are integrated to obtain the high-dimensional data set corresponding to the first number of reservoir region spatial discrete points. The data in the high-dimensional data set is cleaned to remove the invalid data, and normalization and standardization processing is carried out so as to improve the data effectiveness of the hydrodynamic features.

Then, the processed high-dimensional data set is input into the K-Means model, and the high-dimensional data space corresponding to the high-dimensional data set is generated. Based on water temperature-hydrodynamic feature data changes of each reservoir region spatial discrete point at different moments, the first number of reservoir region spatial discrete points are clustered to obtain the second number of reservoir temperature field regions and the spatial distribution of each reservoir temperature field region. Hydrodynamic information includes the water temperature-hydrodynamic feature data and the actual spatial positions of the corresponding reservoir region spatial discrete points at different moments.

According to the actual spatial position information of each reservoir region spatial discrete point clustered in each reservoir temperature field region, the second number of reservoir temperature field regions are arranged, a distribution position of each reservoir temperature field region is determined, and the spatial distribution image of the second number of reservoir temperature field regions in the reservoir is output.

Finally, according to the spatial distribution of each reservoir temperature field region, the region type corresponding to each reservoir temperature field region is respectively determined so as to complete partitioning on the reservoir temperature field.

According to the present disclosure, the water temperature structure of the reservoir can be partitioned without depending on the artificial experience parameters, so that the subjectivity of artificial partitioning can be avoided, and the partitioning result further fits with the real temperature distribution situation of the reservoir and has higher objectivity, thereby providing the powerful technical support for further research on the reservoir temperature field and actual water temperature control of engineering. In one example, the support and bases may also be provided for large-scaled reservoir water temperature structure influence improvement measures and regulation means such as the operation range of a stop log gate and the like.

Based on the same inventive concept, the present disclosure further provides an apparatus for partitioning a reservoir temperature field.

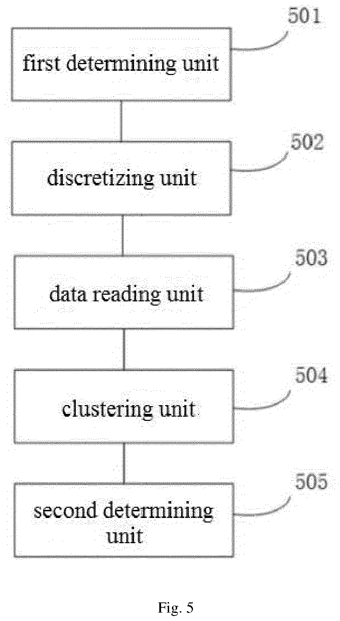

Fig. 5 is a structural block diagram of an apparatus disclosed according to an exemplary embodiment. As shown in Fig. 5, the apparatus includes a first determining unit 501, a discretizing unit 502, a data reading unit 503, a clustering unit 504, and a second determining unit 505.

The first determining unit 501 is used for: based on topographic data of a reservoir, determining a spatial region of the reservoir.

The discretizing unit 502 is used for: carrying out discretization on the spatial region to obtain a first number of reservoir region spatial discrete points and an actual spatial position of each reservoir region spatial discrete point.

The data reading unit 503 is used for: within a specified time period, reading water temperature-hydrodynamic feature data obtained after the first number of reservoir region spatial discrete points are respectively subjected to numerical simulation at different moments.

The clustering unit 504 is used for: based on an actual spatial position of each reservoir region spatial discrete point and the water temperature-hydrodynamic feature data of each reservoir region spatial discrete point at different moments, carrying out clustering processing on the first number of reservoir region spatial discrete points to obtain a second number of reservoir temperature field regions and a spatial distribution of each reservoir temperature field region, wherein the second number is smaller than the first number and each reservoir temperature field region includes at least one reservoir region spatial discrete point.

The second determining unit 505 is used for: according to the spatial distribution of each reservoir temperature field region, respectively determining a region type corresponding to each reservoir temperature field region.

In one embodiment, the clustering unit 504 includes: a first merging unit, which is used for: according to an actual spatial position of each reservoir region spatial discrete point and the water temperature-hydrodynamic feature data of each reservoir region spatial discrete point at different moments, obtaining high-dimensional data corresponding to each reservoir region spatial discrete point; an integrating unit, which is used for integrating the high-dimensional data of all the reservoir region spatial discrete points to obtain a high-dimensional data set corresponding to the first number of reservoir region spatial discrete points; a data space generating unit, which is used for generating a high-dimensional data space corresponding to the high-dimensional data set; a selecting unit, which is used for randomly selecting a second number of reservoir region spatial discrete points from the first number of reservoir region spatial discrete points and determining a number of the rest of reservoir region spatial discrete points as a third number, wherein the second number is the number of reservoir temperature field regions to be partitioned and the sum of the second number and the third number equals the first number; a classifying unit, which is used for: in the high-dimensional data space, calculating a distance between each of the third number of reservoir region spatial discrete points and each of the second number of reservoir region spatial discrete points and determining the reservoir temperature field region corresponding to each reservoir region spatial discrete point; and a clustering sub-unit, which is used for: clustering each reservoir region spatial discrete point into the corresponding reservoir temperature field region to obtain the second number of reservoir temperature field regions, wherein each reservoir temperature field region includes a plurality of reservoir region spatial discrete points.

In another embodiment, the classifying unit includes: a third determining unit, which is used for: in the high-dimensional data space, calculating a distance between a current reservoir region spatial discrete point and each of the second number of reservoir region spatial discrete points in the high-dimensional data space to obtain a second number of distances, the current reservoir region spatial discrete point being one of the third number of reservoir region spatial discrete points; a fourth determining unit, which is used for: determining the minimum distance among the second number of distances as a target distance and determining the reservoir region spatial discrete point corresponding to the target distance from the second number of reservoir region spatial discrete points as a target reservoir region spatial discrete point; and an aggregating unit, which is used for: according to an actual spatial position of the current reservoir region spatial discrete point and a target actual spatial position of the target reservoir region spatial discrete point, aggregating the current reservoir region spatial discrete point and the target reservoir region spatial discrete point to obtain a target reservoir temperature field region corresponding to the current reservoir region spatial discrete point.

In yet another embodiment, the clustering sub-unit includes: a fifth determining unit, which is used for: based on the actual spatial positions of all the reservoir region spatial discrete points in each reservoir temperature field region, respectively calculating a regional spatial position of each reservoir temperature field region, and determining a central position point of each regional spatial position; and a first executing unit, which is used for: if all the central position points are the same as the corresponding target reservoir region spatial discrete points, determining that clustering processing is completed, and obtaining the second number of reservoir temperature field regions.

In still a further embodiment, the apparatus further includes: a sixth determining unit, which is used for: if at least one central position point is different from the corresponding target reservoir region spatial discrete point, determining that clustering processing is uncompleted; a seventh determining unit, which is used for: respectively determining the central position point of each regional spatial position as a clustering central point for the corresponding reservoir temperature field region; and a second executing unit, which is used for: based on the clustering central point for each reservoir temperature field region, carrying out clustering processing again on the first number of reservoir region spatial discrete points until all the central position points obtained again are the same as the corresponding clustering central points.

In one additional embodiment, the apparatus further includes: a marking unit, which is used for: marking each of the first number of reservoir region spatial discrete points according to the corresponding reservoir temperature field region; and a second merging unit, which is used for: according to actual spatial position information and a corresponding mark of each reservoir region spatial discrete point, merging all the actual spatial position information belonging to the same reservoir temperature field region to obtain a spatial distribution of each reservoir temperature field region.

In one more embodiment, the apparatus further includes: an output unit, which is used for: according to the spatial distribution of each reservoir temperature field region, outputting a spatial distribution image of the second number of reservoir temperature field regions in the spatial region of the reservoir.

In a related embodiment, the discretizing unit 502 includes: a partitioning unit, which is used for: by means of a pre-constructed three-dimensional water temperature-hydrodynamic model, carrying out discretization on the spatial region of the reservoir to obtain a first number of mesh regions; an eighth determining unit, which is used for: respectively determining a mesh central point of each mesh region and using the mesh central points as reservoir region spatial discrete points so as to obtain the first number of reservoir region spatial discrete points; and a ninth determining unit, which is used for: according to a spatial coordinate position of each mesh central point in the spatial region, determining the actual spatial position of each reservoir region spatial discrete point.

The specific limitation and beneficial effects of the apparatus can refer to the limitation of the method for partitioning the reservoir temperature field in the above, and will not be repeated herein. All or part of the modules above can be implemented by software, hardware, and a combination thereof. Each module above may be embedded in or independent of a processor in a computer device in a hardware form, or may be stored in a memory in the computer device in a software form, so that the processor calls and performs the operation corresponding to each module above.

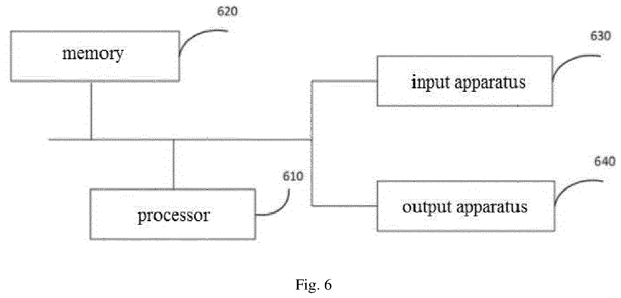

Fig. 6 is a schematic diagram of a hardware structure of a computer device, as disclosed according to an exemplary embodiment. As shown in Fig. 6, the device includes one or more processors 610 and memories 620, the memories 620 include a persistent memory, a volatile memory, and a hard disk, and one processor 610 is shown in Fig. 6 as an example. The device may further include: an input apparatus 630 and an output apparatus 640.

The processor 610, the memory 620, the input apparatus 630, and the output apparatus 640 may be connected via a bus or other modes, wherein connection via a bus is shown in Fig. 6 as an example.

The processor 610 may be a Central Processing Unit (CPU). The processor 610 may also be other universal processors, a Digital Signal Processor (DSP), an Application Specific Integrated Circuit (ASIC), a Field-Programmable Gate Array (FPGA), or other chips such as a programmable logic device, a discrete gate or transistor logic device, a discrete hardware component and the like, or a combination of various chips above. The universal processor may be a microprocessor, or the processor may also be any conventional processor.

The memory 620, as a non-transitory computer-readable storage medium, includes a persistent memory, a volatile memory, and a hard disk, and can be used to store non-transitory software programs, non-transitory computer-executable programs, and modules, such as program instruction/modules corresponding to service management methods in the embodiments of the present application. The processor 610 operates the non-transitory software programs, instructions, and modules stored in the memory 620 so as to perform various function application and data processing of a server, thereby implementing any one of the methods for partitioning the reservoir temperature field above.

The memory 620 may include a program storage area and a data storage area, wherein the program storage area can store an operation system and application programs required for at least one function; and the data storage area can store data used as required. Furthermore, the memory 620 may include a high-speed random access memory, and may also include a non-volatile memory, e.g. at least one magnetic disk memory unit, flash memory unit, or other non-volatile solid-state memory unit. In some embodiments, the memory 620 optionally includes a memory remotely arranged relative to the processor 610, and the remote memory may be connected to a data processing apparatus through a network. Examples of the aforementioned network include, but are not limited to, internet, intranet, the Local Area Network (LAN), the mobile communication network, and their combinations.

The input apparatus 630 may receive input digit or character information and generate key signal input related to user settings and function control. The output apparatus 640 may include display devices such as a display screen.

One or more modules are stored in the memory 620, and when executed by the one or more processors 610, perform the method as shown in Fig. 1 to Fig. 4.

The above-mentioned product can perform the method provided by the embodiments of the present disclosure and have function modules as well as beneficial effects corresponding to the method. Those technical details not described in this embodiment specifically can be known by referring to the related description in the embodiments as shown in Fig. 1 to Fig. 4.

An embodiment of the present disclosure further provides a non-volatile computer storage medium. Computer executable instructions are stored in the computer storage medium, and the computer executable instructions can perform authentication methods in any one of the method embodiments above, wherein the storage medium may be a magnetic disk, an optical disk, a Read-Only Memory (ROM), a Random Access Memory (RAM), a flash memory, a Hard Disk Drive (HDD) or a Solid-State Drive (SSD), and the like; and the storage medium may also include a combination of the above-mentioned types of memories.

Obviously, the above-mentioned embodiments are only illustrative for clear description, but not intended to limit the embodiments. Those ordinary skilled in the art can also make other different forms of variations or changes on the basis of the illustration above. All the embodiments do not need to and also cannot be illustrative herein. All the obvious variations or changes derived therefrom shall still fall within the scope of protection of the present disclosure.

**Claims**

1. A method for partitioning a reservoir temperature field, **characterized by** comprising:

   based on topographic data of a reservoir, determining a spatial region of the reservoir;
   carrying out discretization on the spatial region to obtain a first number of reservoir region spatial discrete points and an actual spatial position of each reservoir region spatial discrete point;
   within a specified time period, reading water temperature-hydrodynamic feature data obtained after the first number of reservoir region spatial discrete points are respectively subjected to numerical simulation at different moments;
   based on an actual spatial position of each reservoir region spatial discrete point and the water temperature-hydrodynamic feature data of each reservoir region spatial discrete point at different moments, carrying out clustering processing on the first number of reservoir region spatial discrete points to obtain a second number of reservoir temperature field regions and a spatial distribution of each reservoir temperature field region, wherein the second number is smaller than the first number, and each reservoir temperature field region includes at least one reservoir region spatial discrete point; and
   according to the spatial distribution of each reservoir temperature field region, respectively determining a region type corresponding to each reservoir temperature field region,
   wherein the step of, based on an actual spatial position of each reservoir region spatial discrete point and the water temperature-hydrodynamic feature data of each reservoir region spatial discrete point at different moments, carrying out clustering processing on the first number of reservoir region spatial discrete points to obtain a second number of reservoir temperature field regions comprises: according to the actual spatial position of each reservoir region spatial discrete point and the water temperature-hydrodynamic feature data of each reservoir region spatial discrete point at different moments, obtaining high-dimensional data corresponding to each reservoir region spatial discrete point; integrating the high-dimensional data of all the reservoir region spatial discrete points to obtain a high-dimensional data set corresponding to the first number of reservoir region spatial discrete points; generating a high-dimensional data space corresponding to the high-dimensional data set; randomly selecting a second number of reservoir region spatial discrete points from the first number of reservoir region spatial discrete points and determining a number of the rest of reservoir region spatial discrete points as a third number, wherein the second number is the number of reservoir temperature field regions to be partitioned, and the sum of the second number and the third number equals the first number; in the high-dimensional data space, calculating a distance between each of the third number of reservoir region spatial discrete points and each of the second number of reservoir region spatial discrete points and determining the reservoir temperature field region corresponding to each reservoir region spatial discrete point; and clustering each reservoir region spatial discrete point into the corresponding reservoir temperature field region to obtain the second number of reservoir temperature field regions, wherein each reservoir temperature field region includes a plurality of reservoir region spatial discrete points.

2. The method of claim 1, **characterized in that** the step of, in the high-dimensional data space, calculating the distance between each of the third number of reservoir region spatial discrete points and each of the second number of reservoir region spatial discrete points comprises:

   in the high-dimensional data space, calculating a distance between a current reservoir region spatial discrete point and each of the second number of reservoir region spatial discrete points in the high-dimensional data space to obtain a second number of distances, the current reservoir region spatial discrete point being one of the third number of reservoir region spatial discrete points;

determining the minimum distance among the second number of distances as a target distance and determining the reservoir region spatial discrete point corresponding to the target distance from the second number of reservoir region spatial discrete points as a target reservoir region spatial discrete point; and

according to an actual spatial position of the current reservoir region spatial discrete point and a target actual spatial position of the target reservoir region spatial discrete point, aggregating the current reservoir region spatial discrete point and the target reservoir region spatial discrete point to obtain a target reservoir temperature field region corresponding to the current reservoir region spatial discrete point.

3. The method of claim 2, **characterized in that** the step of clustering each reservoir region spatial discrete point into the corresponding reservoir temperature field region to obtain the second number of reservoir temperature field regions comprises:

based on the actual spatial positions of all the reservoir region spatial discrete points in each reservoir temperature field region, respectively calculating a regional spatial position of each reservoir temperature field region, and determining a central position point of each regional spatial position; and

if all the central position points are the same as the corresponding target reservoir region spatial discrete points, determining that clustering processing is completed, and obtaining the second number of reservoir temperature field regions.

4. The method of claim 3, **characterized by** further comprising:

if at least one central position point is different from the corresponding target reservoir region spatial discrete point, determining that clustering processing is uncompleted;

respectively determining the central position point of each regional spatial position as a clustering central point for the corresponding reservoir temperature field region; and

based on the clustering central point for each reservoir temperature field region, carrying out clustering processing again on the first number of reservoir region spatial discrete points until all the central position points obtained again are the same as the corresponding clustering central points.

5. The method of claim 3 or 4, **characterized by** further comprising:

marking each of the first number of reservoir region spatial discrete points according to the corresponding reservoir temperature field region; and

according to actual spatial position information and a corresponding mark of each reservoir region spatial discrete point, merging all the actual spatial position information belonging to the same reservoir temperature field region to obtain a spatial distribution of each reservoir temperature field region.

6. The method of claim 5, **characterized by** further comprising:
according to the spatial distribution of each reservoir temperature field region, outputting a spatial distribution image of the second number of reservoir temperature field regions in the spatial region of the reservoir.

7. The method of claim 1, **characterized in that** the step of carrying out discretization on the spatial region to obtain a first number of reservoir region spatial discrete points and an actual spatial position of each reservoir region spatial discrete point comprises:

by means of a pre-constructed three-dimensional water temperature-hydrodynamic model, carrying out discretization on the spatial region of the reservoir to obtain a first number of mesh regions;

respectively determining a mesh central point of each mesh region and using the mesh central points as reservoir region spatial discrete points so as to obtain the first number of reservoir region spatial discrete points; and

according to a spatial coordinate position of each mesh central point in the spatial region, determining the actual spatial position of each reservoir region spatial discrete point.

8. An apparatus for partitioning a reservoir temperature field, **characterized by** comprising:

a first determining unit, which is used for: based on topographic data of a reservoir, determining a spatial region of the reservoir;

a discretizing unit, which is used for: carrying out discretization on the spatial region to obtain a first number of reservoir region spatial discrete points and an actual spatial position of each reservoir region spatial discrete point;

a data reading unit, which is used for: within a specified time period, reading water temperature-hydrodynamic feature data obtained after the first number of reservoir region spatial discrete points are respectively subjected to numerical simulation at different moments;

a clustering unit, which is used for: based on an actual spatial position of each reservoir region spatial discrete point and the water temperature-hydrodynamic feature data of each reservoir region spatial discrete point at different moments, carrying out clustering processing on the first number of reservoir region spatial discrete points to obtain a second number of reservoir temperature field regions and a spatial distribution of each reservoir temperature field region, wherein the second number is smaller than the first number and each reservoir temperature field region includes at least one reservoir region spatial discrete point; and

a second determining unit, which is used for: according to the spatial distribution of each reservoir temperature field region, respectively determining a region type corresponding to each reservoir temperature field region, wherein the clustering unit including: a first merging unit, which is used for: according to an actual spatial position of each reservoir region spatial discrete point and the water temperature-hydrodynamic feature data of each reservoir region spatial discrete point at different moments, obtaining high-dimensional data corresponding to each reservoir region spatial discrete point; an integrating unit, which is used for integrating the high-dimensional data of all the reservoir region spatial discrete points to obtain a high-dimensional data set corresponding to the first number of reservoir region spatial discrete points; a data space generating unit, which is used for generating a high-dimensional data space corresponding to the high-dimensional data set; a selecting unit, which is used for randomly selecting a second number of reservoir region spatial discrete points from the first number of reservoir region spatial discrete points and determining a number of the rest of reservoir region spatial discrete points as a third number, wherein the second number is the number of reservoir temperature field regions to be partitioned and the sum of the second number and the third number equals the first number; a classifying unit, which is used for: in the high-dimensional data space, calculating a distance between each of the third number of reservoir region spatial discrete points and each of the second number of reservoir region spatial discrete points and determining the reservoir temperature field region corresponding to each reservoir region spatial discrete point; and a clustering sub-unit, which is used for: clustering each reservoir region spatial discrete point into the corresponding reservoir temperature field region to obtain the second number of reservoir temperature field regions, wherein each reservoir temperature field region includes a plurality of reservoir region spatial discrete points.

9.  A computer device, **characterized by** comprising a memory and a processor which are in mutual communicational connection, wherein the memory has computer instructions stored therein, and the processor is configured to perform the method for partitioning a reservoir temperature field of any one of claims 1-7 by executing the computer instructions.

10. A computer readable storage medium, with computer instructions stored therein, the computer instructions being used for enabling a computer to perform the method for partitioning a reservoir temperature field of any one of claims 1-7.

based on topographic data of a reservoir, determining a spatial region of the reservoir — S101

carrying out discretization on the spatial region to obtain a first number of reservoir region spatial discrete points and an actual spatial position of each reservoir region spatial discrete point — S102

within a specified time period, reading water temperature-hydrodynamic feature data obtained after the first number of reservoir region spatial discrete points are respectively subjected to numerical simulation at different moments — S103

based on an actual spatial position of each reservoir region spatial discrete point and the water temperature-hydrodynamic feature data of each reservoir region spatial discrete point at different moments, carrying out clustering processing on the first number of reservoir region spatial discrete points to obtain a second number of reservoir temperature field regions and a spatial distribution of each reservoir temperature field region — S104

according to the spatial distribution of each reservoir temperature field region, respectively determining a region type corresponding to each reservoir temperature field region — S105

Fig. 1

Fig. 2

according to the actual spatial position of each reservoir region spatial discrete point and the water temperature-hydrodynamic feature data of each reservoir region spatial discrete point at different moments, obtaining high-dimensional data corresponding to each reservoir region spatial discrete point

S301

integrating the high-dimensional data of all the reservoir region spatial discrete points to obtain a high-dimensional data set corresponding to the first number of reservoir region spatial discrete points

S302

generating a high-dimensional data space corresponding to the high-dimensional data set

S303

randomly selecting a second number of reservoir region spatial discrete points from the first number of reservoir region spatial discrete points and determining a number of the rest of reservoir region spatial discrete points as a third number

S304

in the high-dimensional data space, calculating a distance between each of the third number of reservoir region spatial discrete points and each of the second number of reservoir region spatial discrete points and determining the reservoir temperature field region corresponding to each reservoir region spatial discrete point

S305

clustering each reservoir region spatial discrete point into the corresponding reservoir temperature field region to obtain the second number of reservoir temperature field regions

S306

Fig. 3

Fig. 4

first determining unit — 501

discretizing unit — 502

data reading unit — 503

clustering unit — 504

second determining unit — 505

Fig. 5

620

memory

630

input apparatus

610

processor

640

output apparatus

Fig. 6

Europäisches
Patentamt

European
Patent Office

Office européen
des brevets

# EUROPEAN SEARCH REPORT

**Application Number**

EP 22 20 7027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 242 206 A (UNIV JILIN) 5 June 2020 (2020-06-05) * the whole document * * figures 1a,1b,1c * * paragraph [0039] – paragraph [0044] * * paragraph [0070] * | 1-10 | INV. G06F30/23 ADD. G06F113/08 G06F119/08 |
| X | Anonymous: "k-means clustering – Wikipedia", , 26 June 2022 (2022-06-26), pages 1-17, XP093070688, Retrieved from the Internet: URL:https://en.wikipedia.org/wiki/K-means_clustering * the whole document * * section "Standard algorithm (naive k-means)" * | 1-10 | |
| X | LONG LIANG-HONG ET AL: "Characteristic of the water temperature lag in Three Gorges Reservoir and its effect on the water temperature structure of tributaries", ENVIRONMENTAL EARTH SCIENCES, vol. 75, no. 22, 22 November 2016 (2016-11-22), pages 1-13, XP036203330, DOI: 10.1007/S12665-016-6266-1 * the whole document * * abstract * * figure 3 * | 1-10 | TECHNICAL FIELDS SEARCHED (IPC) G06F |

The present search report has been drawn up for all claims

| Place of search | Date of completion of the search | Examiner |
|---|---|---|
| Munich | 4 August 2023 | Rungger, Matthias |

EPO FORM 1503 03.82 (P04C01)

## ANNEX TO THE EUROPEAN SEARCH REPORT
## ON EUROPEAN PATENT APPLICATION NO.

EP 22 20 7027

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2023

| Patent document cited in search report | | Publication date | Patent family member(s) | Publication date |
|---|---|---|---|---|
| CN 111242206 | A | 05-06-2020 | NONE | |

EPO FORM P0459

For more details about this annex : see Official Journal of the European Patent Office, No. 12/82